(19) Europäisches Patentamt
European Patent Office
Office européen des brevets

(11) **EP 4 621 945 A1**

(12) **EUROPEAN PATENT APPLICATION**
published in accordance with Art. 153(4) EPC

(43) Date of publication:
**24.09.2025 Bulletin 2025/39**

(21) Application number: **23907498.2**

(22) Date of filing: **01.12.2023**

(51) International Patent Classification (IPC):
*H01M 50/134* (2021.01)   *H01M 50/126* (2021.01)
*H01M 50/133* (2021.01)   *H01M 50/119* (2021.01)
*H01M 50/105* (2021.01)

(52) Cooperative Patent Classification (CPC):
**H01M 50/105; H01M 50/119; H01M 50/126;
H01M 50/133; H01M 50/134**

(86) International application number:
**PCT/KR2023/019727**

(87) International publication number:
**WO 2024/136212 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2022 KR 20220182364**

(71) Applicant: **LG Energy Solution, Ltd.
Seoul 07335 (KR)**

(72) Inventors:
• **KIM, Sang Hun
Daejeon 34122 (KR)**
• **KANG, Gyung Soo
Daejeon 34122 (KR)**
• **LEE, Jae Ho
Daejeon 34122 (KR)**
• **YU, Hyung Kyun
Daejeon 34122 (KR)**
• **LEE, Ji Sun
Daejeon 34122 (KR)**

(74) Representative: **Plasseraud IP
104 Rue de Richelieu
CS92104
75080 Paris Cedex 02 (FR)**

(54) **POUCH FILM LAMINATE AND SECONDARY BATTERY**

(57)    A pouch film laminate according to the present disclosure includes a base material layer, a sealant layer, and a gas barrier layer disposed between the base material layer and the sealant layer, wherein the gas barrier layer includes stainless steel, and the pouch film laminate has a tensile rupture strength of about 130% to about 250% of a tensile rupture strength of the gas barrier layer.

[FIG. 1]

<u>100</u>

EP 4 621 945 A1

**Description**

**TECHNICAL FIELD**

[CROSS-REFERENCE TO RELATED APPLICATIONS]

This application claims the priority of Korean Patent Application No. 10-2022-0182364 filed on December 22, 2022, in the Korean Intellectual Property Office, the disclosure of which is incorporated herein by reference in its entirety.

[TECHNICAL FIELD]

The present disclosure relates to a pouch film laminate and a secondary battery manufactured by molding the same.

**BACKGROUND OF THE INVENTION**

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode current collector and a negative electrode current collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified as a pouch-type secondary battery or a can-type secondary battery according to a material of a case accommodating the electrode assembly. In the pouch-type secondary battery, an electrode assembly is accommodated in a pouch made of a flexible polymer material. In the can-type secondary battery, an electrode assembly is accommodated in a case made of a metal or plastic material.

A pouch, which is a case of the pouch-type secondary battery, is manufactured by forming a cup part by performing press processing on a pouch film laminate having flexibility. When the cup part is formed, a secondary battery may be manufactured by accommodating the electrode assembly in the inner accommodating space of the cup part and sealing the sealing part.

In general, a pouch film laminate is formed as a plurality of layers in which a base material layer is stacked on one surface of a gas barrier layer made of a metal, and a sealant layer is stacked on the other surface. In the case of an aluminum pouch in which aluminum is applied to the gas barrier layer, the aluminum pouch has an advantage of securing mechanical strength having a predetermined level or more, being lightweight, and securing complementary and heat dissipation properties for the electrochemical properties of an electrode assembly and an electrolyte. However, the aluminum pouch has a problem in that the pouch may be melted or deformed when an internal pressure and temperature of the cell increase due to fire or the like.

To solve this problem, a technique for preventing deformation due to elevated temperatures and high pressure has been developed by applying a high-strength material such as stainless steel instead of aluminum to the gas barrier layer. However, since the pouch film laminate using the high-strength material as the gas barrier layer has poor moldability, it is not possible to secure a sufficient forming depth when forming the cup part. In some cases, there is a problem in that the pouch film laminate is ruptured. Here, when the forming depth of the pouch film laminate is not secured, since the number of electrode assemblies accommodated therein is limited, it is difficult to improve cell energy density.

Thus, it is necessary to develop a pouch film having sufficient forming depth while securing durability under high temperature and high pressure conditions.

**DISCLOSURE OF THE INVENTION**

**TECHNICAL PROBLEM**

Disclosed herein is a pouch film laminate with improved moldability and a pouch-type secondary battery formed of same.

## TECHNICAL SOLUTION

According to an aspect of the present disclosure, a pouch film laminate is provided. A pouch film laminate according to this aspect may include a base material layer, a gas barrier layer, and a sealant layer. The gas barrier layer may be disposed between the base material layer and the sealant layer. The gas barrier layer may comprise stainless steel. The pouch film laminate may have a tensile rupture strength of about 130% to about 250% of a tensile rupture strength of the gas barrier layer.

Continuing in accordance with this aspect, a difference between the tensile rupture strength of the pouch film laminate and the tensile rupture strength of the gas barrier layer may be about 30% to about 150% of the tensile rupture strength of the gas barrier layer.

Continuing in accordance with this aspect, the tensile rupture strength of the pouch film laminate may be about 400 N/15 mm or more.

Continuing in accordance with this aspect, the tensile rupture strength of the gas barrier layer may be about 300 N/15 mm to about 700 N/15 mm.

Continuing in accordance with this aspect, a sum of a thickness of the base material layer and a thickness of the sealant layer may be about 200% to about 500% of a thickness of the gas barrier layer.

Continuing in accordance with this aspect, the pouch film laminate may have a thickness of about 80 $\mu$m to 300 $\mu$m.

Continuing in accordance with this aspect, the gas barrier layer may have a thickness of about 40 $\mu$m to about 100 $\mu$m.

Continuing in accordance with this aspect, the gas barrier layer may have a melting point of about 1,000°C or more.

Continuing in accordance with this aspect, the stainless steel may include about 10%wt to about 20%wt of chromium.

Continuing in accordance with this aspect, the stainless steel include may be about 5%wt to about 20%wt of nickel.

According to another aspect of the present disclosure, a pouch-type secondary battery is provided. The pouch-type secondary battery according to this aspect may include a pouch-type battery case with an electrode assembly received therein. The pouch-type battery case may be formed of a pouch film laminate including a base material layer, a gas barrier layer, and a sealant layer. The gas barrier layer may be disposed between the base material layer and the sealant layer. The gas barrier layer may include stainless steel. The pouch film laminate may have a tensile rupture strength of about 130% to about 250% of a tensile rupture strength of the gas barrier layer.

According to another aspect of the present disclosure, a pouch film laminate is provided. A pouch film laminate according to this aspect may include a base material layer, a gas barrier layer including stainless steel, and a sealant layer. The gas barrier layer may be disposed between the base material layer and the sealant layer. A tensile rupture strength of the gas barrier layer may be about 40% to about 80% of a tensile rupture strength of the pouch film laminate.

Continuing in accordance with this aspect, the tensile rupture strength of the gas barrier layer may be about 50% to about 65% of the tensile rupture strength of the pouch film laminate.

Continuing in accordance with this aspect, the tensile rupture strength of the gas barrier layer may be about 62% to about 65% of the tensile rupture strength of the pouch film laminate.

Continuing in accordance with this aspect, the pouch film laminate may have a thickness of about 80 $\mu$m to about 300 $\mu$m. A sum of a thickness of the base material layer and a thickness of the sealant layer may be about 200% to about 500% of a thickness of the gas barrier layer. The gas barrier layer may have a thickness of about 40 $\mu$m to about 100 $\mu$m.

Continuing in accordance with this aspect, the gas barrier layer may have a melting point of about 1,000°C or more.

Continuing in accordance with this aspect, the stainless steel may include about 10%wt to about 20%wt of chromium.

Continuing in accordance with this aspect, the stainless steel may include about 5%wt to about 20%wt of nickel.

## ADVANTAGEOUS EFFECTS

The pouch film laminate according to the present disclosure may include the gas barrier layer made of stainless steel, and the pouch film laminate has a tensile rupture strength of about 130% to about 250% of the tensile rupture strength of the gas barrier layer. A pouch film laminate that satisfies the above conditions may have excellent durability at elevated temperatures and high pressure, and simultaneously, have improved moldability of the pouch film laminate to secure sufficient forming depth.

**BRIEF DESCRIPTION OF THE DRAWINGS**

FIG. 1 is a cross-sectional view of a pouch film laminate according to an embodiment of the present disclosure.
FIG. 2 is an exploded view of a pouch-type secondary battery according to an embodiment of the present disclosure.

**MODE FOR CARRYING OUT THE INVENTION**

Advantages and features of the present disclosure, and implementation methods thereof will be clarified through following embodiments described with reference to the accompanying drawings. The present disclosure may, however, be embodied in different forms and should not be construed as limited to the embodiments set forth herein. Rather, these embodiments are provided so that this disclosure will be thorough and complete, and will fully convey the scope of the present disclosure to those skilled in the art. Further, the present disclosure is only defined by scopes of claims. Like reference numerals refer to like elements throughout.

Unless terms used in the present disclosure are defined differently, all terms (including technical and scientific terms) used herein have the same meaning as generally understood by those skilled in the art. Also, unless defined clearly and apparently in the description, the terms as defined in a commonly used dictionary are not ideally or excessively construed as having formal meaning.

In the following description, the technical terms are used only for explaining a specific exemplary embodiment while not limiting the present disclosure. In this specification, the terms of a singular form may comprise plural forms unless specifically mentioned. The meaning of "includes (comprises)" and/or "including (comprising)" does not exclude other components besides a mentioned component.

In this specification, a base material of "A and/or B" means a base material of A or B, or a mixture of A and B.

In this specification, symbol "%" means % by weight unless explicitly indicated otherwise.

Pouch Film Laminate

A pouch film laminate according to the present disclosure includes a base material layer, a gas barrier layer, and a sealant layer, which are sequentially stacked. The gas barrier layer includes stainless steel. The pouch film laminate has a tensile rupture strength of about 130% to about 250% of the tensile rupture strength of the gas barrier layer.

In the present disclosure, since stainless steel that is a high-strength material is used as a material of the gas barrier layer, the problem of deterioration in moldability, which has been the limitation in the related art, may be solved by adjusting a ratio of the tensile rupture strength of the pouch film laminate and the gas barrier layer. According to the present disclosure, in spite of the use of stainless steel as the material of the gas barrier layer, since elongation of the gas barrier layer is improved, moldability is excellent, and a forming depth of a cup part is sufficiently secured, a pouch-type battery case having excellent durability and high moldability may be implemented. Thus, according to the present disclosure, a pouch-type secondary battery having excellent durability at high temperatures and a high pressure while improving a cell energy density because of accommodating a large number of electrode assemblies may be implemented.

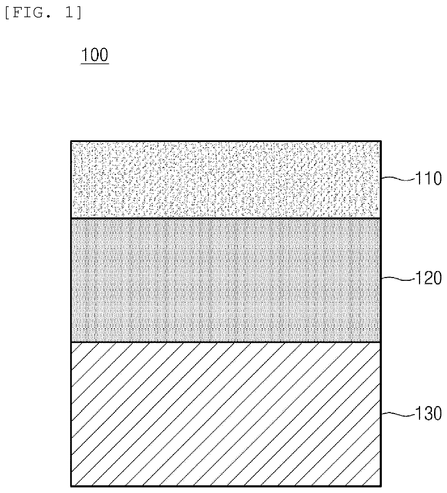

FIG. 1 is a cross-sectional view of a pouch film laminate 100 according to an embodiment of present disclosure. As illustrated in FIG. 1, a base material layer 110, a gas barrier layer 120, and a sealant layer 130 may be sequentially stacked in the pouch film laminate 100.

In accordance with an aspect of the present disclosure, the tensile rupture strength of the pouch film laminate 100 may be about 130% to about 250%, specifically about 130% to about 220%, specifically about 130% to about 200%, and more specifically about 150% to about 200% of the tensile rupture strength of the gas barrier layer 120. When the above numerical range is satisfied, it is possible to secure sufficient mechanical strength to withstand the required pressure inside the pouch while facilitating molding of the cup part of the pouch. When the tensile rupture strength of the pouch film laminate 100 is less than about 130% of the tensile rupture strength of the gas barrier layer 120, there are limitations in that the gas barrier layer 120 is not evenly stretched, resulting in poor moldability of the pouch, and a sufficient forming depth is not secured. When the tensile rupture strength of the pouch film laminate 100 exceeds about 250% of the tensile rupture strength of the gas barrier layer 120, there are limitations in that the total thickness of the pouch film laminate becomes excessively thick, a cell energy density is lowered, heat transfer is not efficiently performed within the limited sealing time to cause deterioration in sealing quality, and handling and cutting processing are difficult.

According to the present disclosure, the difference between the tensile rupture strength of the pouch film laminate 100 and the tensile rupture strength of the gas barrier layer 120 (the tensile rupture strength of the pouch film laminate 100 - the tensile rupture strength of the gas barrier layer 120) may be about 30% to about 150% of the tensile rupture strength of the gas barrier layer 120, specifically about 50% to about 150%, more specifically, about 50% to about 100%, even more specifically about 50% to about 80%, and still more specifically about 50% to about 60%. When the above numerical range is satisfied, it is possible to secure sufficient mechanical strength to withstand a pressure inside the pouch while facilitating molding of the cup part of the pouch.

For example, the tensile rupture strength of the pouch film laminate is about 400 N/15 mm or more, specifically about 700 N/15 mm or more, specifically about 700 N/15 mm to about 1500 N/15 mm, more specifically about 700 N/15 mm to about 1,200 *N/15* mm, and even more specifically about 740 N/15 mm to about 1,020 *N/15* mm, still more specifically about 750 N/15 mm to about 1,000 N/15 mm.

The difference between the tensile rupture strength of the pouch film laminate 100 and the tensile rupture strength of the gas barrier layer may be about 150 N/15mm to about 600 N/15mm, specifically about 200 N/15 mm to about 500 N/15 mm, and more specifically about 250 N/15 mm to about 400 N/15 mm.

The sum of a thickness of the base material layer 110 and a thickness of the sealant layer 130 is about 200% to about 500%, specifically about 200% to about 400%, more specifically about 200% to about 350% of a thickness of the gas barrier layer 120. When the above numerical range is satisfied, it is possible to secure sufficient mechanical strength to withstand a pressure inside the pouch while facilitating molding of the cup part of the pouch. Stress may be dispersed to increase in elongation of the pouch film laminate and improve moldability of the pouch film so that the gas barrier layer 120 is evenly stretched.

The thickness of the pouch film laminate may be specifically about 80 $\mu$m to 300 $\mu$m, more specifically about 100 $\mu$m to about 280 $\mu$m, more specifically about 120 $\mu$m to about 250 $\mu$m, and when the pouch cup part is in the above range, it may be possible to secure sufficient mechanical strength to withstand the pressure inside the pouch while facilitating the molding of the pouch cup part, and increase the cell energy density by accommodating a sufficient number of electrode assemblies compared to the same thickness of the cell.

Hereinafter, each configuration of the pouch film laminate of the present disclosure will be described in detail.

## (1) BASE MATERIAL LAYER

The base material layer 110 is formed at the outermost layer of the pouch film laminate 100 to protect a secondary battery from external friction and collision. The base material layer 110 may be made of a polymer to electrically insulate the electrode assembly from the outside.

The thickness of the base material layer 110 may be about 10 $\mu$m to about 150 $\mu$m, specifically about 35 $\mu$m to about 130 $\mu$m, and more specifically about 40 $\mu$m to about 120 $\mu$m. When the thickness of the base material layer 110 satisfies the above range, it may be possible to improve the moldability of the pouch film laminate using the gas barrier layer having high tensile rupture strength while securing the insulation of the pouch, and prevent heat transfer efficiency and sealing quality from being deteriorated due the excessive thickness of the pouch film laminate.

The base material layer 110 may be made of at least one materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. The base material layer may be made of polyethylene terephthalate (PET), nylon, or a combination thereof having wear resistance and heat resistance. The base material layer may include polyethylene terephthalate; or polyethylene terephthalate and nylon.

The base material layer 110 may have a single film structure.

The base material layer 110 may be made of at least one materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. The base material layer may include at least one of polyester-based films such as polyethylene terephthalate and polybutylene terephthalate having wear resistance and heat resistance, specifically polyethylene terephthalate, but is not limited thereto.

In the present disclosure, the pouch film laminate may further include an adhesive layer disposed between the base material layer 110 and the gas barrier layer 120 to be described later. The adhesive layer may be introduced for adhesion or attachment between the base material layer and the gas barrier layer, and an adhesive layer known in the art may be used without limitation.

That is, the base material layer 110 may have a composite layer structure which is constituted by layers that are respectively made of two or more materials.

Specifically, the base material layer 110 according to the present disclosure may include a first base material layer, a second base material layer and/or an adhesive layer. Here, the thickness of the base material layer 110 means the total thickness of the first base material layer, the second base material layer, and/or the adhesive layer. The first base material layer may be disposed at the outermost layer of the pouch film laminate, and the second base material layer may be disposed between the first base material layer and the gas barrier layer. The adhesive layer may be disposed between the first base material layer and the second base material layer or may be disposed between the second base material layer and the gas barrier layer. The first base material layer, the second base material layer, and the adhesive layer may be made of dissimilar materials having different materials and/or physical properties. An interface may exist between the first base material layer, the second base material layer, and the adhesive layer. This means that the first base material layer, the second base material layer, and the adhesive layer are different layers and are formed separately.

The first base material layer may be a layer disposed at the outermost layer of the pouch film laminate. In this case, the first base material layer may serve to prevent moisture from being permeated from the outside of the pouch. The first base material layer may be made of at least one materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. The first base material layer may include at least one of polyester-based films such as polyethylene terephthalate and polybutylene terephthalate having wear resistance and heat resistance, but is not limited thereto.

As described above, the second base material layer may be a layer disposed between the first base material layer and the gas barrier layer 120. In this case, the second base material layer may serve to improve the moldability of the pouch. The second base material layer may include at least one of polyamide-based films such as nylon 6, nylon (6,6), nylon MXD6, and nylon (4,10), but is not limited thereto. The second base material layer may include nylon 6, and in this case, the moldability of the pouch may be improved due to the excellent stretchability of nylon 6.

(2) GAS BARRIER LAYER

The gas barrier layer 120 is stacked between the base material layer 110 and the sealant layer 130 to secure mechanical strength of the pouch, block introduction and discharge of a gas or moisture outside the secondary battery, and prevent an electrolyte from leaking from the pouch-type battery case.

The tensile rupture strength of the gas barrier layer 120 may be about 300 $N/15$ mm to about 700 N/15 mm, specifically about 350 $N/15$ mm to about 700 N/15 mm, and more specifically about 400 $N/15$ mm to about 650 $N/15$ mm. When the tensile rupture strength of the gas barrier layer 120 satisfies the above range, sufficient mechanical strength to withstand the pressure inside the pouch may be secured.

The thickness of the gas barrier layer 120 may be about 40 $\mu$m to about 100 $\mu$m, specifically about 50 $\mu$m to about 90 $\mu$m, and more specifically about 55 $\mu$m to about 85 $\mu$m. When the thickness of the gas barrier layer 120 satisfies the above range, moldability and gas barrier performance are excellent during the molding of the cup part.

Since the gas barrier layer according to the present disclosure includes stainless steel as described later, there may be little or no change in thickness of the gas barrier layer during forming or stretching the cup part of the pouch film laminate.

A melting point of the gas barrier layer 120 may be about 1,000°C or more, specifically about 1,200°C to about 1,500°C, and more specifically about 1,300°C to about 1,450°C. When the melting point of the gas barrier layer 120 satisfies the above numerical range, structural collapse of the pouch may be prevented even when a temperature of the pouch cell rapidly rises due to thermal runaway.

The gas barrier layer 120 according to the present disclosure includes stainless steel. Specifically, the gas barrier layer 120 may be manufactured by forming and/or processing a stainless steel thin film. The gas barrier layer 120 made of stainless steel may have relatively low thermal conductivity to effectively prevent or delay heat diffusion to other cells in case of the thermal runaway and may have relatively high toughness to suppress an occurrence of cracks of the pouch during use of the pouch-type battery. When stainless steel is contained in the gas barrier layer, moldability of the pouch film laminate can be limited, but as described above, the present disclosure provides a pouch film having improved durability at a high temperature and a high pressure as well as improved moldability by adjusting a tensile rupture strength ratio of the base material layer, the gas barrier layer, and the sealant layer, which are components of the pouch film laminate, to a specific level.

The stainless steel may include at least one material selected from the group consisting of a metal element other than iron (Fe), for example, copper (Cu), chromium (Cr), manganese (Mn), nickel (Ni), magnesium (Mg), silicon (Si), zinc (Zn), phosphorus (P), carbon (c), sulfur (S), and molybdenum (Mo).

Specifically, stainless steel may include about 10 wt% to about 20 wt%, specifically about 16 wt% to about 20 wt%, and more specifically about 18 wt% to about 20 wt% of chromium. When the above numerical range is satisfied, stainless steel has an effect of having excellent corrosion resistance.

In addition, stainless steel may include about 5 wt% to about 20 wt%, specifically about 6 wt% to about 15 wt%, and more specifically about 8 wt% to about 14 wt% of nickel. When the above numerical range is satisfied, there is an effect of further improving corrosion resistance to neutral/weak acidity.

It should be understood that the present disclosure envisions the use of any grade of stainless steel, type, etc., as long as it satisfies the ratio of the tensile rupture strength of the pouch film laminate and the tensile rupture strength of the gas barrier layer. For example, the SUS grade of the stainless steel may be at least one of SUS304, SUS304L, SUS304I, and SUS316L, and specifically at least one of SUS304L, SUS304I, and SUS316L.

In the present disclosure, the percentage or ratio ("Rt") of the thickness of the gas barrier layer with respect to the thickness of the pouch film laminate, which is calculated by Equation 1 below, may be about 13% to about 40%, specifically about 15% to about 25%. When the percentage Rt is within the above range, the pouch film laminate exhibits excellent durability at high temperatures and high pressures and excellent moldability while simultaneously securing gas barrier performance.

[Equation 1]

$$Rt\ (\%) = (\text{thickness of gas barrier layer/thickness of pouch film laminate}) \times 100$$

(3) SEALANT LAYER

The sealant layer 130 is configured to completely seal the inside of the pouch-type battery case by being thermally bonded mutually at the sealing part when the pouch-type battery case accommodating the electrode assembly therein is sealed. For this, the sealant layer 130 may be made of a material having excellent thermal bonding strength.

The sealant layer 130 may be made of a material having insulation, corrosion resistance, and sealing properties. Specifically, since the sealant layer 130 is in direct contact with the electrode assembly and/or the electrolyte inside the pouch-type battery case, the sealant layer 130 may be made of a material having insulation and corrosion resistance. In addition, since the sealant layer 130 must completely seal the inside of the pouch-type battery case and block material movement between the inside and outside, the sealant layer 130 may be made of a material having high sealing performance (e.g., excellent thermal bonding strength). To achieve the required insulation, corrosion resistance, and sealing properties, the sealant layer 130 may be made of a polymer material.

The sealant layer 130 may be made of at least one materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, it may be made of a polyolefin-based resin such as polypropylene (PP) and/or polyethylene (PE), particularly made of a polyolefin-based resin such as polypropylene (PP) and/or polyethylene (PE). In this case, polypropylene consists of cast polypropylene (CPP), acid modified polypropylene (PPa), polypropylene-ethylene copolymer and/or polypropylene-butylene-ethylene terpolymer.

The thickness of the sealant layer 130 may be about 30 $\mu$m to about 130 $\mu$m, specifically about 50 $\mu$m to about 120 $\mu$m, and more specifically about 70 $\mu$m to about 100 $\mu$m. When the thickness of the sealant layer satisfies the above range, the pouch film laminate exhibits excellent moldability and sufficient sealing strength of the sealing part.

The sealant layer 130 according to the present disclosure may have a single film structure made of any one material. Alternatively, the sealant layer 130 may have a composite film structure which is constituted by layers respectively made of two or more materials. Specifically, the sealant layer 130 may include a first sealant layer and a second sealant layer. In this case, the first sealant layer may be disposed adjacent to the gas barrier layer, and the second sealant layer may be disposed on the first sealant layer. The first sealant layer and the second sealant layer may be made of dissimilar materials having different material and/or physical properties. An interface may exist between the first sealant layer and the second sealant layer. This means that the first sealant layer and the second sealant layer are different layers and are formed separately.

Particularly, the first sealant layer may be made of acid-modified polypropylene (PPa) to secure long-term adhesion performance between the gas barrier layer and the first sealant layer. Here, acid-modified polypropylene may be maleic anhydride polypropylene (MAH PP).

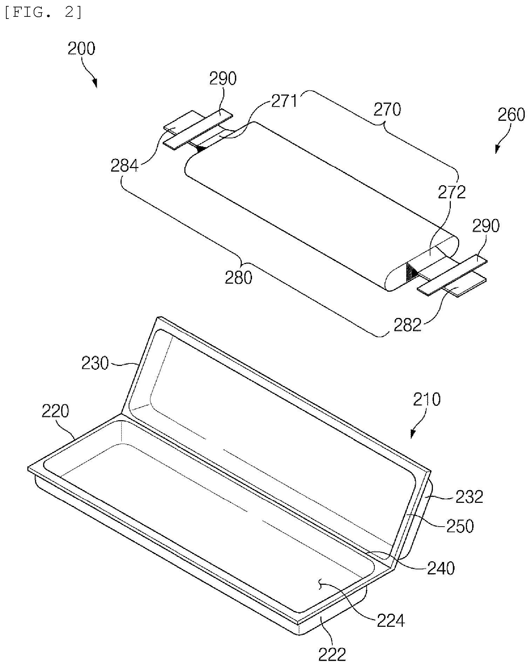

The second sealant layer may be made of a material having insulation, corrosion resistance, and sealing properties. Specifically, since the second sealant layer is in direct contact with the electrode assembly (reference numeral 260 in FIG. 2) and/or the electrolyte inside the accommodation part 224 (FIG. 2), the second sealant layer may be made of a material having insulation and corrosion resistance. In addition, since the second sealant layer must completely seal the inside of the battery case and block material movement between the inside and outside, the second sealant layer may be made of a material having high sealing properties. To secure the insulation, the corrosion resistance, and the sealing properties, the second sealant layer may be made of one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. The second sealant layer may be made of a polyolefin-based resin such as polypropylene (PP) and/or polyethylene (PE). In this case, the polypropylene may consist of cast polypropylene, acid modified polypropylene, polypropylene-ethylene copolymer, and/or polypropylene-butylene-ethylene terpolymer. Here, acid-modified polypropylene may be maleic anhydride polypropylene (MAH PP). Particularly, the second sealant layer may include cast polypropylene (CPP) having heat sealability and high tensile rupture strength.

POUCH-TYPE SECONDARY BATTERY

A pouch-type secondary battery according to an embodiment of the present disclosure will be described below.

A pouch-type secondary battery according to the present disclosure may include a pouch-type battery case in which an electrode assembly is accommodated. The pouch-type battery case may include a pouch film laminate, a gas barrier layer may include stainless steel, the pouch film laminate may include a base material layer, a gas barrier layer, and a sealant layer, which are sequentially stacked, the tensile rupture strength of the pouch film laminate 100 may be about 130% to about 250%of the tensile rupture strength of the gas barrier layer.

Hereinafter, each configuration of the pouch-type secondary battery of the present disclosure will be described in more detail with reference to FIG. 2.

FIG. 2 is an exploded view of a pouch-type secondary battery 200 according to the present disclosure. As illustrated in FIG. 2, the pouch-type secondary battery 200 of the present disclosure may include a pouch-type battery case 210, an electrode assembly 260, an electrode lead 280, an insulating part 290, and an electrolyte (not shown).

(1) POUCH-TYPE BATTERY CASE

The pouch-type battery case 210 may accommodate the electrode assembly 260 therein. The pouch-type battery case 210 may be manufactured by molding the above-described pouch film laminate of the present disclosure. Since the detailed configuration and physical properties of the pouch film laminate are the same as those described above, detailed descriptions thereof will be omitted.

The pouch film laminate may be drawing molded and stretched by a punch or the like to manufacture the pouch-type battery case 210. As a result, the pouch-type battery case 210 may include a cup part 222 and an accommodation part 224. The accommodation part 224 may be configured to accommodate the electrode assembly via an accommodating space formed inside the cup part 222 in the form of a bag as the cup part 222 is formed.

According to an embodiment of the present disclosure, the pouch-type battery case 210 may include a first case 220 and a second case 230 as illustrated in FIG. 2. The first case 220 may include an accommodation part 224 capable of accommodating the electrode assembly 260, and the second case 230 may cover the accommodation part 224 from an upper side to prevent the electrode assembly 260 from being separated outward from the battery case 210. As illustrated in FIG. 2, one side of the first case 220 and one side of the second case 230 may be connected to each other. However, the present disclosure is not limited thereto. For example, the first case 220 and the second case 230 may be separately manufactured to be separated from each other.

According to another embodiment of the present disclosure, when molding a cup part in a pouch film laminate, two cup parts 222 and 232, which are symmetrical to each other, may be draw-molded adjacent to each other in one pouch film laminate. In this case, as illustrated in FIG. 2, the cup parts 222 and 232 may be formed in the first case 220 and the second case 230, respectively. After accommodating the electrode assembly 260 in the accommodation part 224 provided in the cup part 222 of the first case 220, a bridge part 240 formed between the two cup parts 222 and 232 may be folded so that the two cup parts 222 and 232 face each other. In this case, the cup part 232 of the second case 230 also accommodates the electrode assembly 260 from the upper side thereof. Thus, since the two cup parts 222 and 232 accommodate one electrode assembly 260, the electrode assembly 260 having a greater thickness may be accommodated when compared to a case in which one cup part 222 is provided. In addition, since the pouch-type battery case 210 is folded to form one edge of the secondary battery 200, the number of edges to be sealed may be reduced when a sealing process is performed later. Thus, the pouch-type secondary battery 200 can not only be processed with improved speed but also have reduced number of sealing processes.

The pouch-type battery case 210 may be sealed in a after accommodating the electrode assembly 260 so that a portion of the electrode lead 280, i.e., a terminal part is exposed. Particularly, when the electrode lead 280 is connected to the electrode tab 270 of the electrode assembly 260, and the insulating part 290 is formed on a portion of the electrode lead 280, the electrode assembly 260 may be accommodated in the accommodation part 224 provided in the cup part 222 of the first case 220, and the second case 230 may cover the accommodation part 224 from the upper side. Then, an electrolyte may be injected into the accommodation part 224, and the sealing part 250 formed on the edges of the first case 220 and the second case 230 may be sealed.

The sealing part 250 may serve to seal the accommodation part 224. Specifically, the sealing part 250 may seal the accommodation part 224 while being formed along the edge of the accommodation part 224. A sealing temperature of the sealing part 250 may be about 180°C to about 250°C, particularly about 200°C to about 250°C, and more particularly about 210°C to about 240°C. When the sealing temperature satisfies the above numerical range, the pouch-type battery case 210 may secure sufficient sealing strength by thermal bonding.

According to the present disclosure, when the sealant layers of the first case 220 and the second case 230 are stacked to be in contact with each other and then are sealed for about 1.6 seconds at a temperature of about 210°C and a pressure of about 1.2 MPa, a thickness of the sealing part 250 formed on the pouch-type battery case 210 may be about 54% to about 86%, specifically about 55% to about 85%, and more particularly about 60% to about 85% of the thickness of the sealant layer of the pouch film laminate. When the thickness of the sealant layer of the sealing part 250 compared to the thickness of the sealant layer of the pouch film laminate satisfies the above numerical range, it is possible to maintain the insulation properties while securing sufficient sealing strength.

### (2) ELECTRODE ASSEMBLY

The electrode assembly 260 may be inserted into the pouch-type battery case 210 and then sealed in the pouch-type battery case 210 after the electrolyte is injected.

The electrode assembly 260 may be formed by sequentially stacking a positive electrode, a separator, and a negative electrode. Particularly, the electrode assembly 260 may include two types of electrodes such as the positive electrode and the negative electrode and the separator disposed between the electrodes to insulate the electrodes from each other.

Each of the positive electrode and the negative electrode may have a structure in which active material slurry is applied to the electrode current collector having a metal foil or metal mesh shape. The slurry may be usually formed by agitating a granular active material, an auxiliary conductor, a conductive material, and a plasticizer with a solvent added. A solvent may be removed in a subsequent process.

Slurry, in which the electrode active material, the binder and/or the conductive material are mixed, may be applied to a positive electrode current collector and a negative electrode current collector to manufacture a positive electrode and a negative electrode. Then, the positive electrode and the negative electrode may be stacked on both sides of a separator to manufacture an electrode assembly 260 having a predetermined shape. The types of electrode assembly 260 may include a stack type, a jelly-roll type, a stack and folding type, and the like, but is not limited thereto.

The electrode assembly 260 may include an electrode tab 270.

The electrode tab 270 may be connected to each of the positive electrode and the negative electrode of the electrode assembly 260 to protrude outward from the electrode assembly 260, thereby providing a path, through which electrons are moved, between the inside and outside of the electrode assembly 260. The electrode current collector provided in the electrode assembly 260 may be constituted by a portion coated with the electrode active material and a distal end, on which the electrode active material is not applied, i.e., a non-coating portion. The electrode tab 270 may be provided by cutting the non-coating portion or by connecting the separate conductive member to the non-coating portion through ultrasonic welding. As illustrated in FIG. 2, the electrode tabs 270 may protrude in different directions of the electrode assembly 260, respectively, but is not limited thereto. For example, the electrode tabs 270 may protrude in various directions, for example, protrude in parallel to each other from one side in the same direction.

### (3) ELECTRODE LEAD

The electrode lead 280 may supply electricity to the outside of the secondary battery 200. The electrode lead 280 may be connected to the electrode tab 270 of the electrode assembly 260 by spot welding or the like.

The electrode lead 280 may be connected to the electrode assembly 260 and protrude out of the pouch-type battery case 210 via the sealing part 250. Specifically, one end of the electrode lead 280 may be connected to the electrode assembly 260, particularly the electrode tab 270, and the other end of the electrode lead 280 may protrude out of the pouch-type battery case 210.

The electrode leads 280 may include a positive electrode lead 282 having one end connected to the positive electrode tab 272 to extend in a direction in which the positive electrode tab 272 protrudes and a negative electrode lead 284 having one end connected to the negative electrode tab 274 to extend in a direction in which the negative electrode tab 274 protrudes. The other ends of both the positive electrode lead 282 and the negative electrode lead 284 may protrude out of the battery case 210. Thus, electricity generated in the electrode assembly 260 may be supplied to the outside. Also, since each of the positive electrode tab 272 and the negative electrode tab 274 is formed to protrude in various directions, each of the positive electrode lead 282 and the negative electrode lead 284 may extend in various directions. The positive electrode lead 282 and the negative electrode lead 284 may be made of materials different from each other. That is, the positive electrode lead 282 may be made of the same material as the positive electrode current collector, i.e., an aluminum (Al) material, and the negative electrode lead 284 may be made of the same material as the negative electrode current collector, i.e., a copper (Cu) material or a copper material coated with nickel (Ni). A portion of the electrode lead 280, which protrudes to the outside of the battery case 210, may be provided as a terminal part and electrically connected to an external terminal.

(4) INSULATING PART

The insulating part 290 may prevent the electricity generated from the electrode assembly 260 from flowing to the battery case 210 through the electrode lead 280 and may maintain the sealing of the battery case 210. For this, the insulating part 290 may be made of a nonconductive material having non-conductivity, which is not electrically conductive. In general, although an insulation tape which is easily attached to the electrode lead 280 and has a relatively thin thickness is mainly used as the insulating part 290, the present disclosure is not limited thereto. For example, any member may be used as the insulating part 290 as long as the member is capable of insulating the electrode lead 280.

The insulating part 290 may be disposed to surround a portion of an outer circumference of the electrode lead 280. Particularly, at least a portion of the electrode lead 280 may be surrounded by the insulating part 290. In this case, the insulating part 290 may be disposed between the electrode lead 280 and the pouch-type battery case 210. The insulation part 290 may be disposed to be limited within the sealing part 250, on which a first case 220 and a second case 230 of the pouch-type battery case 210 are thermally fused, so that the electrode lead 280 is bonded to the battery case 210.

(5) ELECTROLYTE

The pouch-type secondary battery 200 according to the present disclosure may further include an electrolyte (not shown) injected into the pouch-type battery case 210. The lithium ions generated by electrochemical reaction of the electrode during charging and discharging of the secondary battery 200 may move in the electrolyte. The electrolyte may include a non-aqueous organic electrolyte that is a mixture of a lithium salt and an organic solvent or a polymer using a polymer electrolyte. Furthermore, the electrolyte may include a sulfide-based, oxide-based, or polymer-based solid electrolyte, and the solid electrolyte may have flexibility that is easily deformed by external force.

Hereinafter, the present disclosure will be described in detail with reference to an exemplary embodiment. However, the following embodiment is merely illustrative, and the present disclosure is not limited to the following embodiment. It is obvious to those skilled in the art that various changes and modifications are possible within the scope and spirit of the present disclosure, and it is natural that these changes and modifications fall within the scope of the appended claims.

Example and Comparative Example

Example 1: Manufacture of pouch film laminate

A first adhesive film having a width of about 266 mm, a length of about 50 m, and a thickness of about 3 $\mu$m, a nylon film having a width of about 266 mm, a length of about 50 m, and a thickness of about 50 $\mu$m, a second adhesive film having a width of about 266 mm, a length of about 50 m, and a thickness of about 3 $\mu$m, and a polyethylene terephthalate (PET) film having a width of 266 mm, a length of 50 m, and a thickness of 50 $\mu$m were sequentially stacked on one surface of a stainless steel thin film having a width of about 266 mm, a length of about 50 m, and a thickness of about 60 $\mu$m. A polypropylene (PP) film having a width of about 266 mm, a length of about 50 m, and a thickness of about 80 $\mu$m was stacked on the other surface of the stainless steel thin film. As a result, a pouch film laminate having a structure in which polypropylene film/stainless steel thin film/first adhesive film/nylon film/second adhesive film/polyethylene terephthalate film are sequentially stacked was manufactured.

Here, an SUS grade of the stainless steel provided in the stainless steel thin film was SUS304L.

Here, the polypropylene film is used for a sealant layer, the stainless steel thin film is used for a gas barrier layer, and the first adhesive film, the nylon film, the second adhesive film, and the polyethylene terephthalate film are used for a base material layer.

Example 2: Manufacture of pouch film laminate

A pouch film laminate was manufactured in the same manner as in Example 1, except that a stainless steel thin film having a thickness of about 40 $\mu$m was used.

An SUS grade of the stainless steel provided in the stainless steel thin film of Example 2 was SUS304L.

Example 3: Manufacture of pouch film laminate

An adhesive film having a width of about 266 mm, a length of about 50 m, and a thickness of about 3 $\mu$m and a polyethylene terephthalate (PET) film having a width of 266 mm, a length of 50 m, and a thickness of 40 $\mu$m were sequentially stacked on one surface of a stainless steel thin film having a width of about 266 mm, a length of about 50 m, and a thickness of about 40 $\mu$m. A polypropylene (PP) film having a width of about 266 mm, a length of about 50 m, and a thickness of about 80 $\mu$m was stacked on the other surface of the stainless steel thin film. As a result, a pouch film laminate having a structure in which polypropylene film/stainless steel thin film/adhesive film/polyethylene terephthalate film are sequentially laminated was manufactured.

Here, an SUS grade of the stainless steel provided in the stainless steel thin film was SUS304L.

Here, the polypropylene film is used for a sealant layer, the stainless steel thin film is used for a gas barrier layer, and the adhesive film and the polyethylene terephthalate film are used for a base material layer.

Example 4: Manufacture of pouch film laminate

An adhesive film having a width of about 266 mm, a length of about 50 m, and a thickness of about 3 $\mu$m and a polyethylene terephthalate (PET) film having a width of 266 mm, a length of 50 m, and a thickness of 40 $\mu$m were sequentially stacked on one surface of a stainless steel thin film having a width of about 266 mm, a length of about 50 m, and a thickness of about 40 $\mu$m. A polypropylene (PP) film having a width of about 266 mm, a length of about 50 m, and a thickness of about 80 $\mu$m was stacked on the other surface of the stainless steel thin film. As a result, a pouch film laminate having a structure in which polypropylene film/stainless steel thin film/adhesive film/polyethylene terephthalate film are sequentially laminated was manufactured.

Here, an SUS grade of the stainless steel provided in the stainless steel thin film was SUS304I.

Here, the polypropylene film is used for a sealant layer, the stainless steel thin film is used for a gas barrier layer, and the adhesive film and the polyethylene terephthalate film are used for a base material layer.

Example 5: Manufacture of pouch film laminate

An adhesive film having a width of about 266 mm, a length of about 50 m, and a thickness of about 3 $\mu$m and a polyethylene terephthalate (PET) film having a width of 266 mm, a length of 50 m, and a thickness of 40 $\mu$m were sequentially stacked on one surface of a stainless steel thin film having a width of about 266 mm, a length of about 50 m, and a thickness of about 40 $\mu$m. A polypropylene (PP) film having a width of about 266 mm, a length of about 50 m, and a thickness of about 80 $\mu$m was stacked on the other surface of the stainless steel thin film. As a result, a pouch film laminate having a structure in which polypropylene film/stainless steel thin film/adhesive film/polyethylene terephthalate film are sequentially laminated was manufactured.

Here, an SUS grade of the stainless steel provided in the stainless steel thin film was SUS316L.

Here, the polypropylene film is used for a sealant layer, the stainless steel thin film is used for a gas barrier layer, and the adhesive film and the polyethylene terephthalate film are used for a base material layer.

Comparative Example 1: Manufacture of pouch film laminate

A pouch film laminate was manufactured in the same manner as in Example 1, except that a polyethylene terephthalate (PET) film having a thickness of 12 $\mu$m and a nylon film having a thickness of 15 $\mu$m were used.

Comparative Example 2: Manufacture of pouch film laminate

A pouch film laminate was manufactured in the same manner as in Example 1, except that a polyethylene terephthalate (PET) film having a thickness of 12 $\mu$m, a nylon film having a thickness of 15 $\mu$m, and a stainless steel thin film having a thickness of about 40 $\mu$m were used.

An SUS grade of the stainless steel provided in the stainless steel thin film of Comparative Example 2 was SUS304L.

A pouch-type battery case was manufactured in the same manner as in Example 1, except that the pouch film laminate manufactured through the above method was used.

Comparative Example 3: Manufacture of pouch film laminate

A pouch film laminate was manufactured in the same manner as in Example 1, except that a polyethylene terephthalate (PET) film having a thickness of 100 $\mu$m, a nylon film having a thickness of 100 $\mu$m, and a stainless steel thin film having a thickness of about 40 $\mu$m were used.

An SUS grade of the stainless steel provided in the stainless steel thin film of Comparative Example 3 was SUS304L.

Experimental Example 1: Measurement of tensile rupture strength of pouch film laminate and each layer

Results obtained by measuring a pouch film laminate manufactured through each of Embodiments 1 to 3 and Comparative Examples 1 to 3 and each layer thereof are shown in Table 1 below.

Particularly, when the pouch film laminate or each film is cut to a width of about 15 mm and a length of about 100mm, to prepare a specimen, and then, both ends of the specimen in lengthwise direction are coupled to upper/lower jigs such that the gap between the end of the part fastened to the upper jig and the end of the part fastened to the lower jig is 50mm of a universal testing machine ("UTM"), and pulled in a direction of about 180° at a speed of about 5 mm/min at room temperature (about 25°C), the tensile rupture strength was defined as the maximum load applied until the specimen ruptured divided by the cross-sectional area of the specimen before tensioning. Results of the measurement are shown in Table 1 below.

Experimental Example 2: Evaluation of maximum forming depth

A maximum forming depth of each of the pouch film laminates manufactured in Examples 1 to 5 and Comparative Examples 1 to 3 was measured. Particularly, when the pouch film laminate was cut into a width of about 266mm and a length of about 200mm, and then, the pouch film laminate, which is cut using Kwangshin Hi-Tech's pouch forming equipment, is molded and stretched to mold a cup part having a width of about 90 cm and a length of about 160 cm, a forming depth (unit: mm) immediately before the pouch film laminate is ruptured was defined as a maximum forming depth. After preparing 10 pouch film laminates according to Embodiments 1 to 3 and Comparative Examples 1 to 3 to perform an experiment for measuring the above maximum forming depth 10 times, a mean value obtained through the experiments is shown in Table 1 below.

[Table 1]

| | Example 1 | Example 2 | Example 3 | Example 4 | Example 5 | Comparative Example 1 | Comparative Example 2 | Comparative Example 3 |
|---|---|---|---|---|---|---|---|---|
| Base material layer | PET 50μm + Adhesive film 3μm + Nylon 50μm + Adhesive film 3μm | PET 50μm + Adhesive film 3μm + Nylon 50μm + Adhesive film 3μm | PET 40μm + Adhesive film 3μm | PET 40μm + Adhesive film 3μm | PET 40μm + Adhesive film 3μm | PET 12μm + Adhesive film 3μm + Nylon 15μm + Adhesive film 3μm | PET 12μm + Adhesive film 3μm + Nylon 15μm + Adhesive film 3μm | PET 100μm + Adhesive film 3μm + Nylon 100μm + Adhesive film 3μm |
| Gas barrier layer | STS 60μm (SUS 304L) | STS 40μm (SUS 304L) | STS 60μm (SUS 304L) | STS 60μm (SUS 304l) | STS 60μm (SUS 316L) | STS 60μm (SUS 304L) | STS 40μm (SUS 304L) | STS 40μm (SUS 304L) |
| Sealant layer | PP 80μm | PP 80μm | PP 80μm | PP 80μm | PP 80μm | PP 80μm | PP 80μm | PP 80μm |
| Tensile rupture strength of pouch film laminate (N/15mm) | 1000 | 750 | 850 | 800 | 830 | 750 | 500 | 1050 |
| Tensile rupture strength of gas barrier layer (N/15mm) | 650 | 400 | 650 | 600 | 630 | 650 | 400 | 400 |
| Ratio of tensile rupture strength of the pouch film laminate / tensile rupture strength of the gas barrier layer | 153.8 | 187.5 | 130.8 | 133.3 | 131.7 | 115.4 | 125.0 | 262.5 |
| Ratio of (tensile rupture strength of the pouch film laminate - tensile rupture strength of the gas barrier layer) / tensile rupture strength of gas barrier layer (%) | 53.8 | 87.5 | 30.7 | 33.3 | 31.7 | 15.4 | 25.0 | 162.5 |
| Mean value of maximum forming depth (mm) | 12.2 | 10.5 | 9.6 | 10.3 | 10.2 | 7.4 | 5.3 | 10.1 |

13

According to Table 1, in the case of Examples 1 to 5 in which the pouch film laminate has tensile rupture strength of about 130% to about 250% of the tensile rupture strength of the gas barrier layer, the forming depth was deeper than that in Comparative Examples 1 and 2, and as a result, it may be confirmed that moldability of the pouch film laminate manufactured in Examples 1 to 5 is superior. In the case of Comparative Example 3 in which pouch film laminate has tensile rupture strength exceeds about 250% of the tensile rupture strength of the gas barrier layer, although the thickness of the pouch film laminate of Comparative Example 3 is thicker than Example 3, it still exhibits the same level of moldability and does not increase forming depth anymore. Further, the increased thickness of Comparative Example 3 limits heat transfer required for sealing, and also, sufficient number of electrode assemblies cannot be accommodated within the thickness of the pouch secondary battery - thereby, decreasing cell energy density.

[Explanation of drawing symbols]

100:    pouch film laminate
110:    base material layer
120:    gas barrier layer
130:    sealant layer
200:    pouch-type secondary battery
210:    pouch-type battery case
220:    first case
222:    cup part
224:    accommodation part
230:    second case
232:    cup part
240:    bridge part
250:    sealing part
260:    electrode assembly
270:    electrode tab
272:    positive electrode tab
274:    negative electrode tab
280:    electrode lead
282:    positive electrode lead
284:    negative electrode lead
290:    insulating part

**Claims**

1. A pouch film laminate comprising:

    a base material layer,
    a sealant layer, and
    a gas barrier layer being disposed between the base material layer and the sealant layer,
    wherein the gas barrier layer comprises stainless steel, the pouch film laminate having a tensile rupture strength of 130% to 250% of a tensile rupture strength of the gas barrier layer.

2. The pouch film laminate of claim 1, wherein a difference between the tensile rupture strength of the pouch film laminate and the tensile rupture strength of the gas barrier layer is 30% to 150% of the tensile rupture strength of the gas barrier layer.

3. The pouch film laminate of claim 1, wherein the tensile rupture strength of the pouch film laminate is 400 *N/15* mm or more.

4. The pouch film laminate of claim 1, wherein the tensile rupture strength of the gas barrier layer is 300 *N/15* mm to 700 N/15 mm.

5. The pouch film laminate of claim **1,** wherein a sum of a thickness of the base material layer and a thickness of the sealant layer is 200% to 500% of a thickness of the gas barrier layer.

6. The pouch film laminate of claim **1,** wherein the pouch film laminate has a thickness of 80 μm to 300 μm.

7. The pouch film laminate of claim **1,** wherein the gas barrier layer has a thickness of 40 μm to 100 μm.

8. The pouch film laminate of claim **1,** wherein the gas barrier layer has a melting point of 1,000°C or more.

9. The pouch film laminate of claim 1, wherein the stainless steel comprises 10%wt to 20%wt of chromium.

10. The pouch film laminate of claim 1, wherein the stainless steel comprises 5%wt to 20%wt of nickel.

11. A pouch-type secondary battery comprising:

> a pouch-type battery case with an electrode assembly disposed therein, the pouch-type battery case comprising a pouch film laminate comprising:
>
>> a base material layer,
>> a sealant layer, and
>> a gas barrier layer being disposed between the base material layer and the gas barrier layer,
>> wherein the gas barrier layer comprises stainless steel, and
>
> the pouch film laminate having a tensile rupture strength of 130% to 250% of a tensile rupture strength of the gas barrier layer.

12. A pouch film laminate comprising:

> a base material layer,
> a sealant layer, and
> a gas barrier layer being disposed between the base material layer and the sealant layer,
> wherein the gas barrier layer including stainless steel, and
> wherein a tensile rupture strength of the gas barrier layer is about 40% to about 80% of a tensile rupture strength of the pouch film laminate.

13. The pouch film laminate of claim 12, wherein the tensile rupture strength of the gas barrier layer is about 50% to about 65% of the tensile rupture strength of the pouch film laminate.

14. The pouch film laminate of claim 12, wherein the tensile rupture strength of the gas barrier layer is about 62% to about 65% of the tensile rupture strength of the pouch film laminate.

15. The pouch film laminate of claim 12, wherein the pouch film laminate has a thickness of 80 μm to 300 μm.

16. The pouch film laminate of claim 12, wherein a sum of a thickness of the base material layer and a thickness of the sealant layer is 200% to 500% of a thickness of the gas barrier layer.

17. The pouch film laminate of claim 12, wherein the gas barrier layer has a thickness of 40 μm to 100 μm.

18. The pouch film laminate of claim 12, wherein the gas barrier layer has a melting point of 1,000°C or more.

19. The pouch film laminate of claim 12, wherein the stainless steel comprises 10%wt to 20%wt of chromium.

20. The pouch film laminate of claim 12, wherein the stainless steel comprises 5%wt to 20%wt of nickel.

[FIG. 1]

100

[FIG. 2]

## INTERNATIONAL SEARCH REPORT

<table>
<tr><td>International application No.<br><br>**PCT/KR2023/019727**</td></tr>
</table>

**A. CLASSIFICATION OF SUBJECT MATTER**

**H01M 50/134**(2021.01)i; **H01M 50/126**(2021.01)i; **H01M 50/133**(2021.01)i; **H01M 50/119**(2021.01)i; **H01M 50/105**(2021.01)i

According to International Patent Classification (IPC) or to both national classification and IPC

**B. FIELDS SEARCHED**

Minimum documentation searched (classification system followed by classification symbols)

H01M 50/134(2021.01); B32B 15/08(2006.01); H01M 10/052(2010.01); H01M 2/02(2006.01); H01M 4/13(2010.01); H01M 50/10(2021.01); H01M 50/105(2021.01); H01M 50/129(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 파우치 필름(pouch film), 가스 배리어층(gas barrier layer), 스테인리스 스틸 (stainless steel), 인장 파단 강도(tensile strength)

**C. DOCUMENTS CONSIDERED TO BE RELEVANT**

| Category* | Citation of document, with indication, where appropriate, of the relevant passages | Relevant to claim No. |
|---|---|---|
| A | KR 10-2281543 B1 (DAI NIPPON PRINTING CO., LTD.) 26 July 2021 (2021-07-26)<br>See paragraph [0033] and claims 7 and 15. | 1-20 |
| A | KR 10-2019-0046688 A (LG CHEM, LTD.) 07 May 2019 (2019-05-07)<br>See claim 10. | 1-20 |
| A | CN 108369998 A (PANASONIC IP MAN CO., LTD.) 03 August 2018 (2018-08-03)<br>See claims 1-4. | 1-20 |
| A | KR 10-2391823 B1 (DONGWOO FINE-CHEM CO., LTD.) 29 April 2022 (2022-04-29)<br>See entire document. | 1-20 |
| A | KR 10-2020-0134199 A (FUJIMORI KOGYO CO., LTD.) 01 December 2020 (2020-12-01)<br>See entire document. | 1-20 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 March 2024** | **08 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/019727**

| Patent document cited in search report | | | Publication date (day/month/year) | Patent family member(s) | | | Publication date (day/month/year) |
|---|---|---|---|---|---|---|---|
| KR | 10-2281543 | B1 | 26 July 2021 | CN | 105794012 | A | 20 July 2016 |
| | | | | CN | 105794012 | B | 25 June 2019 |
| | | | | CN | 109986855 | A | 09 July 2019 |
| | | | | CN | 109986855 | B | 29 December 2020 |
| | | | | CN | 110216952 | A | 10 September 2019 |
| | | | | CN | 110216952 | B | 18 January 2022 |
| | | | | JP | 2015-106528 | A | 08 June 2015 |
| | | | | JP | 2016-062805 | A | 25 April 2016 |
| | | | | JP | 6326788 | B2 | 23 May 2018 |
| | | | | JP | 6476679 | B2 | 06 March 2019 |
| | | | | KR | 10-2016-0093019 | A | 05 August 2016 |
| | | | | US | 10128471 | B2 | 13 November 2018 |
| | | | | US | 2016-0301040 | A1 | 13 October 2016 |
| | | | | WO | 2015-083657 | A1 | 11 June 2015 |
| KR | 10-2019-0046688 | A | 07 May 2019 | CN | 110392946 | A | 29 October 2019 |
| | | | | CN | 110392946 | B | 07 April 2023 |
| | | | | EP | 3582295 | A2 | 18 December 2019 |
| | | | | EP | 3582295 | B1 | 30 November 2022 |
| | | | | PL | 3582295 | T3 | 27 February 2023 |
| | | | | US | 2020-0014031 | A1 | 09 January 2020 |
| | | | | US | 2021-0336272 | A1 | 28 October 2021 |
| | | | | WO | 2019-083273 | A2 | 02 May 2019 |
| | | | | WO | 2019-083273 | A3 | 20 June 2019 |
| CN | 108369998 | A | 03 August 2018 | JP | WO2017-110062 | A1 | 11 October 2018 |
| | | | | US | 2018-0366692 | A1 | 20 December 2018 |
| | | | | WO | 2017-110062 | A1 | 29 June 2017 |
| KR | 10-2391823 | B1 | 29 April 2022 | None | | | |
| KR | 10-2020-0134199 | A | 01 December 2020 | CN | 107618232 | A | 23 January 2018 |
| | | | | CN | 107618232 | B | 12 October 2021 |
| | | | | JP | 2018-008497 | A | 18 January 2018 |
| | | | | KR | 10-2018-0008301 | A | 24 January 2018 |
| | | | | KR | 10-2019-0113729 | A | 08 October 2019 |
| | | | | KR | 10-2071348 | B1 | 30 January 2020 |
| | | | | KR | 10-2227055 | B1 | 11 March 2021 |
| | | | | US | 10903524 | B2 | 26 January 2021 |
| | | | | US | 2018-0019502 | A1 | 18 January 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220182364